(19) **Europäisches Patentamt European Patent Office Office européen des brevets**

(11) **EP 4 546 466 A1**

(12) **EUROPEAN PATENT APPLICATION**
published in accordance with Art. 153(4) EPC

(43) Date of publication:
30.04.2025 Bulletin 2025/18

(21) Application number: 23827034.2

(22) Date of filing: 12.06.2023

(51) International Patent Classification (IPC):
$H01M\ 4/62^{(2006.01)}$   $C08L\ 1/26^{(2006.01)}$
$C08L\ 9/06^{(2006.01)}$   $H01M\ 4/13^{(2010.01)}$
$H01M\ 4/139^{(2010.01)}$

(52) Cooperative Patent Classification (CPC):
H01M 4/133; C08B 11/12; C08L 1/26; C08L 1/286;
C08L 9/06; H01M 4/13; H01M 4/139; H01M 4/62;
H01M 4/622; H01M 10/0525; H01M 2004/027;
Y02E 60/10

(86) International application number:
PCT/JP2023/021648

(87) International publication number:
WO 2023/248848 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 23.06.2022 JP 2022100836
23.06.2022 JP 2022100837
06.12.2022 JP 2022194560
06.12.2022 JP 2022194561

(71) Applicant: Nippon Paper Industries Co., Ltd.
Tokyo 114-0002 (JP)

(72) Inventors:
• SAKAJIRI Takayuki
Tokyo 114-0002 (JP)
• INOUE Kazuhiko
Tokyo 114-0002 (JP)

(74) Representative: Kuhnen & Wacker
Patent- und Rechtsanwaltsbüro PartG mbB
Prinz-Ludwig-Straße 40A
85354 Freising (DE)

(54) **CARBOXYMETHYL CELLULOSE AND/OR SALT THEREOF, ELECTRODE COMPOSITION FOR NONAQUEOUS ELECTROLYTE SECONDARY BATTERIES, ELECTRODE FOR NONAQUEOUS ELECTROLYTE SECONDARY BATTERIES, AND NONAQUEOUS ELECTROLYTE SECONDARY BATTERY**

(57)    A carboxymethyl cellulose and/or a salt thereof which are used for a binder for nonaqueous electrolyte secondary battery electrodes, in which a degree of carboxymethyl substitution per anhydroglucose unit is 0.5 to 1.2, a dispersibility as determined using a powder tester is 20 to 60%, or a dispersibility (BS) in methanol as determined by turbinscan is 3 to 10%.

EP 4 546 466 A1

**Description**

Technical Field

The present invention relates to carboxymethyl cellulose and/or a salt thereof, which are used for a binder for nonaqueous electrolyte secondary battery electrodes, and an electrode composition for nonaqueous electrolyte secondary batteries, an electrode for nonaqueous electrolyte secondary batteries and a nonaqueous electrolyte secondary battery in which the carboxymethyl cellulose and/or a salt thereof are used.

Background Art

In recent years, with the rapid spread of small mobile terminals typified by smartphones, tablets and the like, and stationary storage batteries, there has been increasing demand for small high-energy-density batteries for driving those devices.

In general, a graphite-based material is used for negative electrodes of lithium ion secondary batteries, but in the present situation, the limit of the capacity of the graphite-based material, which is 372 mAh/g on a theoretical basis ($LiC_6$), is approached.

For further improving the energy density of a lithium ion secondary battery, it is necessary to select a new material. Thus, materials obtained by alloying lithium with silicon, tin or the like which is the lowest in potential after carbon and lithium and has a large specific capacity attract attention.

Among these materials, silicon can occlude up to 4.4 lithium atoms per silicon atom on a molar ratio basis, and theoretically gives a capacity about 10 times that of a graphite-based carbon material. However, there is a problem that when the silicon particles occlude lithium, their volume increases about 3- to 4-fold, and thus repetition of charge-discharge causes the progress of degradation, leading to a decrease in capacity. Detailed analysis of the phenomenon has shown that if lithium is inserted into an active material containing silicon, very small cracks are generated in an electrode due to volume expansion, an electrolytic solution enters the very small cracks, and new films (SEI layers) are formed. Here, an irreversible capacity that is not reversed occurs, resulting in a decreased battery capacity. The phenomenon appears as a change in charge-discharge efficiency during a cycle. A decrease in cycle efficiency at the initial stage of the cycle which is associated with a particularly large volume change has a significant effect on the life as a battery combined with a positive electrode having high charge-discharge efficiency. Therefore, when an active material containing silicon is used, minimization of the change of the electrode structure due to the volume expansion is an important issue.

To address such circumstances, in Patent Literature 1, a binder essentially containing three components which are carboxymethyl cellulose or a metal salt thereof, polyacrylic acid or a metal salt thereof, and styrene-butadiene rubber or polyvinylidene fluoride is used to improve battery characteristics. However, examples and comparative examples in Patent Literature 1 indicate that when only two components (carboxymethyl cellulose and styrene-butadiene rubber, or carboxymethyl cellulose and polyvinylidene fluoride) are used as a binder, desired battery characteristics are not obtained.

Citation List

Patent Literature

Patent Literature 1: JP 2015-198038 A

Summary of Invention

Technical Problem

In Patent Literature 1, three components including carboxymethyl cellulose or a metal salt thereof are essential as a binder, but physical properties of carboxymethyl cellulose or a metal salt thereof are not described. Studies by the present inventors have shown that the physical properties have an effect on battery characteristics, in particular, the electrical resistance of the resulting electrode layer.

That is, an object of the present invention is to provide carboxymethyl cellulose and/or a salt thereof, which are used for a binder for nonaqueous electrolyte secondary battery electrodes, and enable the obtainment of an electrode layer having small electrical resistance, and an electrode composition for nonaqueous electrolyte secondary batteries, an electrode for nonaqueous electrolyte secondary batteries and a nonaqueous electrolyte secondary battery in which the carboxymethyl cellulose and/or a salt thereof are used.

2

Solution to Problem

The present inventors have intensively conducted studies, and resultantly found that the above-described problems can be solved by using carboxymethyl cellulose having a predetermined dispersibility.

Specifically, the present invention provides:

(1) carboxymethyl cellulose and/or a salt thereof which are used for a binder for nonaqueous electrolyte secondary battery electrodes, in which a degree of carboxymethyl substitution per anhydroglucose unit is 0.5 to 1.2, a dispersibility as determined using a powder tester is 20 to 60%, or a dispersibility (BS) in methanol as determined by turbinscan is 3 to 10%;

(2) the carboxymethyl cellulose and/or a salt thereof according to (1), in which a ratio of a length L to a width D (L/D) is 1.5 to 5.0;

(3) the carboxymethyl cellulose and/or a salt thereof according to (1), in which a value obtained by subtracting a particle size D50 from a particle size D90 (particle size D90 - particle size D50) is 5 to 30 $\mu$m, and a value obtained by subtracting a particle size D10 from the particle size D50 (particle size D50 - particle size D10) is 5 to 20 $\mu$m;

(4) the carboxymethyl cellulose and/or a salt thereof according to (1), in which a ratio between a value obtained by subtracting a particle size D50 from a particle size D90 (particle size D90 - particle size D50) and a value obtained by subtracting a particle size D10 from the particle size D50 (particle size D50 - particle size D10) ((particle size D90 - particle size D50)/(particle size D50 - particle size D10)) is 1.0 to 2.5;

(5) the carboxymethyl cellulose and/or a salt thereof according to (1), in which a ratio between a particle size D90 and a particle size D10 (particle size D90/particle size D10) is 7.5 to 11;

(6) the carboxymethyl cellulose and/or a salt thereof according to any one of (1) to (5), in which a particle size D50 is 10 to 20 $\mu$m;

(7) the carboxymethyl cellulose and/or a salt thereof according to any one of (1) to (5), in which a difference between a particle size D90 and a particle size D10 (particle size D90 - particle size D10) is 10 to 50 $\mu$m;

(8) the carboxymethyl cellulose and/or a salt thereof according to any one of (1), (2), (4) and (5), in which a difference between a particle size D90 and a particle size D50 (particle size D90 - particle size D50) is 5 to 30 $\mu$m;

(9) the carboxymethyl cellulose and/or a salt thereof according to any one of (1), (2), (4) and (5), in which a difference between a particle size D50 and a particle size D10 (particle size D50 - particle size D10) is 5 to 20 $\mu$m;

(10) the carboxymethyl cellulose and/or a salt thereof according to any one of (1) to (5), in which an angle of repose is 42° or more;

(11) the carboxymethyl cellulose and/or a salt thereof according to any one of (1) to (5), in which an angle of fall is 19° or more;

(12) the carboxymethyl cellulose and/or a salt thereof according to any one of (1) to (5), in which a viscosity in a 1 mass% aqueous solution which is measured at 25°C with a B type viscometer (30 rpm) is 1,000 to 20,000 mPa·s;

(13) the carboxymethyl cellulose and/or a salt thereof according to any one of (1) to (5), in which when 2 liters of a 0.3 mass% aqueous solution of the carboxymethyl cellulose or a salt thereof with a dry mass m is prepared, and all filtered through a 250 mesh filter under a pressure-reduced condition of -200mmHg, and a dry mass M of a residue on the filter after filtration is measured, a ratio of the dry mass M to the dry mass m is less than 200 ppm;

(14) an electrode composition for nonaqueous electrolyte secondary batteries, including the carboxymethyl cellulose and/or a salt thereof according to any one of (1) to (5), and styrene-butadiene rubber having a average particle size of 50 nm to 300 nm;

(15) the electrode composition for nonaqueous electrolyte secondary batteries according to (14), in which a glass transition temperature of the styrene-butadiene rubber is - 50°C to 50°C;

(16) an electrode for nonaqueous electrolyte secondary battery in which the electrode composition for nonaqueous electrolyte secondary batteries according to (14) is used; and

(17) a nonaqueous electrolyte secondary battery in which the electrode composition for nonaqueous electrolyte secondary batteries according to (14) is used.

Advantageous Effects of Invention

According to the present invention, there is provided carboxymethyl cellulose and/or a salt thereof, which are used for a binder for nonaqueous electrolyte secondary battery electrodes, and enable the obtainment of an electrode layer having small electrical resistance. In addition, there are provided an electrode composition for nonaqueous electrolyte secondary batteries, an electrode for nonaqueous electrolyte secondary batteries and a nonaqueous electrolyte secondary battery in which the carboxymethyl cellulose and/or a salt thereof are used.

Description of Embodiments

Hereinafter, a carboxymethyl cellulose and/or a salt thereof according to the present invention will be described. The carboxymethyl cellulose and/or a salt thereof according to the present invention are a carboxymethyl cellulose and/or a salt thereof which are used for a binder for nonaqueous electrolyte secondary battery electrodes and in which a degree of carboxymethyl substitution per anhydroglucose unit is 0.5 to 1.2, a dispersibility as determined using a powder tester is 20 to 60%, or a dispersibility (BS) in methanol as determined by turbinscan is 3 to 10%.

<Carboxymethyl cellulose and/or salt thereof>

The carboxymethyl cellulose and/or a salt thereof (hereinafter, sometimes abbreviated as CMC) which are contained in an active material layer and constitute the present invention have a structure in which a hydroxyl group in a glucose unit constituting cellulose is substituted with a carboxymethyl ether group. The carboxymethyl cellulose may be in the form of a salt. As the salt of carboxymethyl cellulose, metal salts such as carboxymethyl cellulose sodium salts, and the like are exemplified.

In the present invention, cellulose means a polysaccharide having a structure in which D-glucopyranose (also referred to simply as a "glucose unit" or "anhydroglucose") is connected by $\beta,1\text{-}4$ bond. Cellulose is generally classified into natural cellulose, regenerated cellulose, fine cellulose, microcrystalline cellulose without non-crystalline regions, and the like according to an origin, a production method and the like.

As the natural cellulose, bleached or unbleached pulp, refined linter, cellulose produced by microorganisms such as acetic acid bacteria, and the like are exemplified. The raw material for the bleached or unbleached pulp is not limited, and examples thereof include wood, cotton, straw, and bamboo. The method for producing the bleached or unbleached pulp is not limited. Mechanical methods, chemical methods, or combinations of a mechanical method and a chemical method are exemplified. As the bleached or unbleached pulp, mechanical pulp, chemical pulp, groundwood pulp, sulfite pulp, kraft pulp, and papermaking pulp are exemplified. As the bleached or unbleached pulp, dissolving pulp is also exemplified which is chemically refined and used mainly by being dissolved in a chemical, and serves as a main raw material for artificial fibers, cellophane and the like.

As the regenerated cellulose, regenerated cellulose obtained by dissolving cellulose in a solvent such as a copper ammonia solution, a cellulose xanthate solution, or a morpholine derivative, followed by spinning again is exemplified.

As the fine cellulose, fine cellulose obtained by depolymerizing a cellulose-based material such as natural cellulose or regenerated cellulose by acid hydrolysis, alkali hydrolysis, enzymatic decomposition, blasting, vibration ball milling, or the like, and fine cellulose obtained by mechanically treating a cellulose-based material are exemplified.

In production of CMC for use in the present invention, a known method for producing CMC can be applied. CMC can be produced by, for example, treating cellulose with a mercerizing agent (alkali) to prepare mercerized cellulose (alkali cellulose), and then adding an etherifying agent to the mercerized cellulose to induce an etherification reaction.

As the raw material cellulose, the above-described cellulose can be used without limitation, but one having a high cellulose purity is preferable, and dissolving pulp or linter is more preferable. The use of the cellulose mentioned above enables production of CMC having a high purity.

As the mercerizing agent, alkali metal hydroxide salts such as sodium hydroxide and potassium hydroxide are exemplified. As the etherifying agent, monochloroacetic acid, sodium monochloroacetate and the like are exemplified.

In a common method for producing water-soluble carboxymethyl cellulose, the molar ratio between the mercerizing agent and the etherifying agent (mercerizing agent/etherifying agent) is typically 2.00 to 2.45 when monochloroacetic acid is used as the etherifying agent. This is because when the ratio is 2.00 or more, the etherification reaction can be adequately carried out, so that it is possible to prevent unreacted monochloroacetic acid from remaining to waste. When the ratio is 2.45 or less, a side reaction between an excess mercerizing agent and monochloroacetic acid can be prevented from proceeding to form an alkali metal glycolate, so that economic efficiency is improved.

In the present invention, CMC may be a commercialized product. Examples of the commercialized product include "SUNROSE" (trade name) manufactured by NIPPON PAPER INDUSTRIES CO., LTD.

In the present invention, the degree of etherification of CMC refers to a ratio of a group substituted with a carboxymethyl ether group (-OCH$_2$COOH) among hydroxyl groups (-OH) in glucose units constituting the cellulose.

(Degree of substitution with carboxymethyl groups)

In the CMC used in the present invention, the degree of substitution with carboxymethyl groups per anhydroglucose unit (hereinafter, sometimes referred to as a DS value) is 0.5 to 1.2. Since the DS value is 0.5 or more, good solubility in water can be maintained, so that generation of undissolved substances can be suppressed. Since the DS value is 1.2 or less, an increase in thread-forming property of liquid can be suppressed to maintain easy handling. Therefore, the DS value of CMC of the present invention is 0.5 to 1.2, preferably 0.5 to 1.0, and more preferably 0.6 to 1.0.

The method for measuring the degree of substitution with carboxymethyl groups is as follows. A sample is precisely weighed to about 2.0 g, and put into a 300 mL conical flask with a stopper. To this, 100 mL of a liquid obtained by adding 100 mL of special grade concentrated nitric acid to 1,000 mL of methanol is added, and the mixture is shaken for 3 hours to convert a salt of carboxymethyl cellulose (CMC) into H-CMC (hydrogen-type carboxymethyl cellulose). The absolute-dry H-CMC is precisely weighed to 1.5 to 2.0 g, and put into a 300 mL conical flask with a stopper. H-CMC is wetted with 15 mL of 80% methanol, 100 mL of 0.1 N-NaOH is added, and the mixture is shaken at room temperature for 3 hours. Using phenolphthalein as an indicator, excess NaOH is back-titrated with $0.1N-H_2SO_4$, and the degree of carboxymethyl substitution (DS value) is calculated from the following equations.

$A = [(100 \times F'\text{-}0.1\,N\text{ - }H_2SO_4\,(mL) \times F) \times 0.1]/(\text{absolute-dry mass (g) of H-CMC}]$

Degree of carboxymethyl substitution $= 0.162 \times A/(1 - \text{-->} 0.058 \times A)$

F': factor of $0.1\,N$ - $H_2SO_4$
F: factor of $0.1\,N$ - NaOH

(Viscosity)

The viscosity of the carboxymethyl cellulose or a salt thereof according to the present invention in a 1 mass% aqueous solution, which is measured at 25°C with a B type viscometer (30 rpm) is preferably 1,000 to 20,000 mPa·s, more preferably 1,000 to 15,000 mPa·s, and still more preferably 1,000 to 10,000 mPa·s. If the viscosity is excessively high, there is a problem that during preparation of a slurry, adequate mixing with an active material and a conductive auxiliary agent cannot be performed, and in application of the slurry to a current collector, coating cannot be performed because of poor fluidity. If the viscosity is excessively low, there is a problem that in application of the slurry to the current collector, the slurry flows down from the current collector, so that adequate coating cannot be performed, and an active material and a binding material such as SBR migrate, so that electrical resistance increases.

The method for measuring the viscosity is as follows:
Carboxymethyl cellulose or a salt thereof is weighed and taken in a glass beaker with a volume of 1,000 mL, and dispersed in 900 mL of distilled water to prepare an aqueous dispersion with a solid content of 1% (w/v). The aqueous dispersion is stirred at 600 rpm at 25°C for 3 hours using a stirrer. Thereafter, the viscosity 3 minutes after stirring at a rotation speed of 30 rpm is measured by the method of JIS-Z-8803 using a B type viscometer (manufactured by Toki Sangyo Co., Ltd.).

(Dispersibility)

In the carboxymethyl cellulose and/or a salt thereof according to the present invention, the dispersibility as determined using a powder tester is 20 to 60%, preferably 25 to 55%, and more preferably 30 to 50%. When the dispersibility is within the above-described range, the electrical resistance value is improved because good dispersivity is exhibited when CMC is used as a binder or a dispersant in a negative electrode composition.

On the other hand, if the dispersibility is excessively large, there is a problem that powder swirling becomes heavy, so that a predetermined amount of carboxymethyl cellulose cannot be dissolved, and a function as a binder or a dispersant in the negative electrode is deteriorated, resulting in increased electrical resistance. If the dispersibility is excessively small, there is a problem that adequate mixing with other materials cannot be performed, and electrical resistance increases.

Here, the method for measuring the dispersibility is such that using a powder property testing apparatus (Powder Tester PT-X (manufactured by Hosokawa Micron Corporation)), a dispersion unit of PT-X is charged with 10 g of a sample, and allowed to fall, and the following equation is used to calculate the dispersibility from the amount of powder falling down onto watch glass.

Dispersibility (%) = (10 (g)- amount of powder falling down onto watch glass (g))/10 (g)

(Dispersibility (BS) in methanol)

In the carboxymethyl cellulose and/or a salt thereof according to the present invention, the dispersibility (BS) in methanol as determined by turbinscan is 3 to 10%, and preferably 5 to 10%. When the dispersibility (BS) in methanol is in the above-described range, the electrical resistance value is improved because good dispersivity is exhibited when CMC is used as a binder or a dispersant in a negative electrode composition. On the other hand, if the dispersibility (BS) in methanol is excessively large, the electric resistance value may be deteriorated because uniform dispersion is not achieved in a negative electrode composition.

Here, the dispersibility (BS) in methanol is obtained by measuring the backscattered light intensity (%) by turbinscan (TURBISCAN Lab, manufactured by EKO Instruments Co., Ltd.). Here, the term "BS" refers to the backscattered light intensity (%). A specific measurement method is as follows. A measurement vessel is charged with 0.075 g of carboxymethyl cellulose and 15 ml of methanol. Subsequently, the mixture is stirred with a vortex mixer for 10 seconds, and quickly set in the apparatus to start measurement. The backscattered light intensity after 30 minutes at a height of 20 mm is calculated as a dispersibility (BS) in methanol.

(Angle of repose)

The angle of repose of the carboxymethyl cellulose and/or a salt thereof according to the present invention is preferably 42° or more, and more preferably 45° or more. If the angle of repose is excessively small, there is a problem that powder spontaneously flows out of an outlet of a feeder, so that a predetermined amount of carboxymethyl cellulose cannot be dissolved, and a function as a binder or a dispersant in the negative electrode is deteriorated, resulting in increased electrical resistance.

Here, the method for measuring the angle of repose is such that using a powder property testing apparatus (Powder Tester PT-X (manufactured by Hosokawa Micron Corporation)) in which the angle measurement system is set to "peak operation", the measurement is performed with a sieve having a mesh size of 710 μm and a line shape of 450 μm. The moisture content of carboxymethyl cellulose used in the measurement is adjusted to 6.0 to 9.0%.

(Angle of fall)

The angle of fall of the carboxymethyl cellulose and/or a salt thereof according to the present invention is preferably 19° or more, and more preferably 21° or more. If the angle of fall is excessively small, there is a problem that powder spontaneously flows out of an outlet of a feeder, so that a predetermined amount of carboxymethyl cellulose cannot be dissolved, and a function as a binder or a dispersant in the negative electrode is deteriorated, resulting in increased electrical resistance.

Here, the method for measuring the angle of fall is such that using a powder property testing apparatus (Powder Tester PT-X (manufactured by Hosokawa Micron Corporation)) in which the angle measurement system is set to "peak operation", the measurement is performed with a sieve having a mesh size of 710 μm and a line shape of 450 μm. The moisture content of carboxymethyl cellulose used in the measurement is adjusted to 6.0 to 9.0%.

(Angle of difference)

A value obtained by subtracting the angle of fall value from the angle of repose value described above can be expressed as an angle of difference.

(Filtration residue amount)

In the carboxymethyl cellulose and/or a salt thereof according to the present invention, the filtration residue amount is preferably in a predetermined range. That is, 2 liters of a 0.3 mass% aqueous solution of the carboxymethyl cellulose or a salt thereof with a dry mass m is prepared, and all filtered through a 250 mesh filter under a pressure-reduced condition of -200mmHg, and a dry mass M of a residue on the filter after filtration is measured. The ratio of the dry mass M to the dry mass m is preferably less than 200 ppm, and more preferably less than 50 ppm.

If the value is excessively large, there is a problem that clogging is likely to occur in filtration of an electrode slurry, and thus the amount of carboxymethyl cellulose in the filtered slurry becomes smaller than a predetermined amount, so that a function as a binder or a dispersant is deteriorated, resulting in increased electrical resistance.

(Particle size)

In the carboxymethyl cellulose and/or a salt thereof according to the present invention, a value obtained by subtracting a particle size D10 from a particle size D90 (particle size D90 - particle size D10) is preferably 10 to 50 μm, more preferably 10 to 30 μm, and still more preferably 20 to 30 μm. If the value is excessively large, there is a problem that particles are separated into layers, a uniform solution is not obtained, and electrical resistance increases.

In the carboxymethyl cellulose and/or a salt thereof according to the present invention, a value obtained by subtracting a particle size D50 from the particle size D90 (particle size D90 - particle size D50) is preferably 5 to 30 μm,

more preferably 10 to 30 μm, and still more preferably 10 to 20 μm. If the value is excessively large, there is a problem that particles are separated into layers, a uniform solution is not obtained, and electrical resistance increases.

In the carboxymethyl cellulose and/or a salt thereof according to the present invention, a value obtained by subtracting the particle size D10 from the particle size D50 (particle size D50 - particle size D10) is preferably 5 to 20 μm, more preferably 5 to 15 μm, and still more preferably 8 to 12 μm. If the value is excessively large, there is a problem that particles are separated into layers, and a uniform solution is not obtained.

In the carboxymethyl cellulose and/or a salt thereof according to the present invention, the ratio between the value obtained by subtracting the particle size D50 from the particle size D90 (particle size D90 - particle size D50) and the value obtained by subtracting the particle size D10 from the particle size D50 (particle size D50 - particle size D10) ((particle size D90 - particle size D50)/(particle size D50 - particle size D10)) is preferably 1.0 to 2.5, more preferably 1.2 to 2.3, and still more preferably 1.3 to 2.0. If the value is excessively large or excessively small, there is a problem that the dispersion state with other negative electrode materials becomes uneven, and the resulting battery has a poor impedance.

In the carboxymethyl cellulose and/or a salt thereof according to the present invention, the ratio between the particle size D90 and the particle size D10 (particle size D90/particle size D10) is preferably 7.5 to 11, more preferably 8.0 to 10, and still more preferably 8.2 to 9.8. If the value is excessively large or excessively small, there is a problem that the dispersion state with other negative electrode materials becomes uneven, and the resulting battery has a poor impedance.

Here, the particle size D10 (hereinafter, sometimes referred to as D10) is a particle size at which the integration from the minimum value includes 10% of particles, and the particle size D50 (hereinafter, sometimes referred to as D50) is a particle size at which the integration from the minimum value includes 50% of particles, in a particle size distribution based on a volume average particle size. The particle size D50 is also called a average particle size. The particle size D90 (hereinafter, sometimes referred to as D90) is a particle size at which the integration from the minimum value includes 90% of particles. The particle size distribution based on a volume average particle size can be measured by, for example, a laser diffraction/scattering particle size distribution meter with methanol used as a dispersant.

In the carboxymethyl cellulose and/or a salt thereof according to the present invention, the particle size D10 is preferably 1 to 10 μm, the particle size D50 is preferably 10 to 20 μm, and the particle size D90 is preferably 20 to 40 μm.

The value of particle size distribution sharpness of the carboxymethyl cellulose and/or a salt thereof according to the present invention is calculated from the following equation.

$$\text{Particle size distribution sharpness} = [(D50/D10) + (D90/D50)]/2 \qquad \text{[Equation 1]}$$

The particle size distribution sharpness in the present invention is preferably 2.8 to 5.0, and more preferably 3.0 to 4.0. If the value is excessively small, dissolution of CMC is insufficient when negative electrode materials such as powdered CMC and active materials and water are mixed and stirred to prepare a slurry, so that adhesiveness between the active materials is deteriorated, and resistance increases.

In the carboxymethyl cellulose and/or a salt thereof according to the present invention, L/D is preferably 1.5 to 5.0, more preferably 1.7 to 4.0, and still more preferably 2.0 to 3.0. Here, L represents a length of the carboxymethyl cellulose and/or a salt thereof, and D represents a width of the carboxymethyl cellulose and/or a salt thereof. For L and D, averages of the lengths and widths of 50 carboxy methylcelluloses and/or salts thereof observed with, for example, a scanning electron microscope are a length L and a width D, respectively. L/D is an average value of L/D of 50 carboxymethyl celluloses and/or salts thereof.

In the carboxymethyl cellulose and/or a salt thereof according to the present invention, the BET specific surface area is preferably 0.5 to 5.0 $m^2/g$, more preferably 1.0 to 4.0 $m^2/g$, and still more preferably 1.5 to 3.0 $m^2/g$. If the value is excessively small, water hardly penetrates the inside of CMC, and the amount of undissolved CMC increases, so that adhesiveness between active materials is deteriorated, and resistance increases.

Powdered CMC is weighed to 0.1 g, taken in a test tube, and dried at 105°C for 1 hour with nitrogen gas fed using FlowPrep060 manufactured by Micromeritics Instruments Corporation, and the BET specific surface area is measured using GEMINI VII2390 manufactured by Shimadzu Corporation.

[Grinding]

In the present invention, carboxymethyl cellulose or a salt thereof may be finely ground. As a method for finely grinding carboxymethyl cellulose or a salt thereof, either a dry grinding method in which the treatment is performed in a powder state or a wet grinding method in which the treatment is performed in a state of being dispersed or dissolved in a liquid may be selected.

By performing dry grinding or wet grinding on carboxymethyl cellulose or a salt thereof in a mechanical manner, gel particles that are derived from the carboxymethyl cellulose or a salt thereof and are present as undissolved substances in an aqueous solution are finely divided. As a result, it may be possible to suppress coarse undissolved substances that cause streak defects, peeling, pinholes and the like occurring on the surface of a negative electrode.

Apparatuses for fine grinding which can be used in the present invention are as follows.

Examples of dry grinding machines include a cutting mill, an impact mill, and an airstream mill. They can be used alone or in combination, or several treatment steps can be performed with the same type of machine.

As the cutting mill, Mesh Mill (manufactured by Horai Co., Ltd.), Atoms (manufactured by Yamamoto Hyakuma Mfg. Co., Ltd.), Knife Mill (manufactured by PALLMANN), Granulator (manufactured by Herbold), Rotary Cutter Mill (manufactured by Nara Machinery Co., Ltd.), and the like are exemplified.

As the impact mill, include Pulverizer (manufactured by Hosokawa Micron Corporation), Fine Ipact Mill (manufactured by Hosokawa Micron Corporation), Supermicron Mill (manufactured by Hosokawa Micron Corporation), Sample Mill (manufactured by SEISHIN ENTERPRISE Co., Ltd.), Bantum Mill (manufactured by SEISHIN ENTERPRISE Co., Ltd.), Atomizer (manufactured by SEISHIN ENTERPRISE Co., Ltd.), Tornade Mill (Nikkiso Co., Ltd.), Turbo Mill (Turbo Kogyo Co., Ltd.), Bevel Impactor (manufactured by Sowa Iron Works Co., Ltd.), and the like are exemplified.

As the airstream mill, CGS Jet Mill (manufactured by Mitsui Mining Co., Ltd.), Jet Mill (manufactured by Sansho Industry Co., Ltd.), Ebara Jet Micronizer (manufactured by Ebara Corporation), Ceren Miller (manufactured by Masuko Sangyo Co., Ltd.), Supersonic Jet Mill (manufactured by Nippon Pneumatic Mfg. Co., Ltd.), and the like are exemplified.

As the medium mill, vibratory ball mills and the like are exemplified.

As the wet grinding machine, Masscolloider (manufactured by Masuko Sangyo Co., Ltd.), Bead Mill (manufactured by AIMEX Co., Ltd.) as the medium mill, High-Pressure Homogenizer (manufactured by Sanmaru Machinery Co., Ltd.), and the like can be exemplified.

In the present invention, a step of classifying finely ground carboxymethyl cellulose or a salt thereof according to the particle size can be provided.

The classification step described above may be provided in the fine grinding step, or may be provided after the fine grinding. As a classification method, a known method may be used. Examples of the dry classifier include a cyclone classifier, a DS separator, a turbo classifier, a micro-separator, and an air separator. Examples of the wet classifier include a liquid cyclone system, a centrifugal settler, and a hydroseparator.

The CMC for use in the present invention may be one kind of CMC, or a combination of two or more kinds of CMC having different etherification degrees, DS values, viscosities, molecular weights, and the like.

<Binder for nonaqueous electrolyte secondary batteries>

The carboxymethyl cellulose and/or a salt thereof according to the present invention are used for a binder for nonaqueous electrolyte secondary battery electrodes. Normally, an aqueous solution containing carboxymethyl cellulose and/or a salt thereof is used as a binder for nonaqueous electrolyte secondary battery electrodes.

The concentration of carboxymethyl cellulose or a salt thereof in an aqueous solution of the carboxymethyl cellulose and/or a salt thereof is typically 0.1 to 10 mass%, preferably 0.2 to 4 mass%, and more preferably 0.5 to 2 mass%.

The conditions for production of an aqueous solution of carboxymethyl cellulose and/or a salt thereof are not limited. For example, carboxymethyl cellulose and/or a salt thereof are added to water (for example, distilled water, purified water or tap water), and dissolved by performing stirring or the like as necessary.

In addition to carboxymethyl cellulose and/or a salt thereof, other binders can be contained as the binder for nonaqueous electrolyte secondary batteries. As the binder that is used for a negative electrode composition for negative electrodes, synthetic rubber-based binders are exemplified. As the synthetic rubber-based binder, one or more selected from the group consisting of styrene butadiene rubber (SBR), nitrile butadiene rubber, methyl methacrylate butadiene rubber, chloroprene rubber, carboxy-modified styrene butadiene rubber, and latexes of these synthetic rubbers can be used. Among them, styrene-butadiene rubber (SBR) is preferable. As the binder that is used for an electrode composition for positive electrodes, the synthetic rubber-based binders listed as the binder for negative electrodes, and polytetrafluoroethylene (PTFE) are exemplified.

Here, the average particle size (D50) of SBR is preferably 50 to 300 nm, and more preferably 50 to 200 nm. If the average particle size (D50) of SBR is excessively large, there is a problem that SBR is not uniformly deposited on the active material, and the binder function is deteriorated, so that electrical resistance increases. If the average particle size is excessively small, there is a problem that the SRB covers the active material, so that electrical resistance increases.

The glass transition temperature (Tg) of SBR is preferably -50°C to 50°C.

When the SBR is within the above-described range, the SBR is adequately mixed with the carboxymethyl cellulose and/or a salt thereof according to the present invention, and the resulting negative electrode layer has appropriate flexibility, so that electrical resistance is unlikely to increase.

<Electrode composition for nonaqueous electrolyte secondary batteries>

The electrode composition for nonaqueous electrolyte secondary batteries according to the present invention (hereinafter, sometimes referred to as an "electrode composition") contains at least an electrode active material, and the carboxymethyl cellulose and/or a salt thereof according to the present invention as the above-mentioned binder for nonaqueous electrolyte secondary battery.

That is, as a binder for electrodes, the carboxymethyl cellulose and/or a salt thereof according to the present invention can constitute an electrode composition with an electrode active material. In this case, the content of the carboxymethyl cellulose and/or a salt thereof in the electrode composition is preferably 0.1 to 4.0 mass% with respect to the entire electrode composition.

When the above-mentioned other binder is used, the content of the binders for nonaqueous electrolyte secondary batteries in the electrode composition is preferably 1 to 10 mass%, more preferably 1 to 6 mass%, and still more preferably 1 to 2 mass%.

(Electrode active material)

The electrode active material contained in the active material layer constituting the present invention is a negative electrode active material when the electrode for nonaqueous electrolyte secondary batteries is for a negative electrode, and a positive electrode active material when the electrode for nonaqueous electrolyte secondary batteries is for a positive electrode.

As the negative electrode active material, graphitic materials such as graphite (natural graphite, artificial graphite and the like), coke, and carbon fiber; elements capable of forming an alloy with lithium, that is, for example, silicon-based compounds, and elements such as Al, Sn, Ag, Bi, Mg, Zn, In, Ge, Pb and Ti; compounds containing an element capable of forming an alloy with lithium; combined materials of an element capable of forming an alloy with lithium and the compound and carbon and/or the graphitic material, or nitrides containing lithium can be exemplified. Among them, graphitic materials and silicon-based compounds are preferable, and graphite, and silicon particles or silicon oxide particles as silicon-based compounds are more preferable.

The silicon oxide in the present invention is represented by $SiO_x$ ($0 < x \leq 2$). In the present invention, a combined material of a silicon-based compound and a graphite material is more suitable for the active material layer.

When the negative electrode active material is a combined material of a graphitic material and a silicon-based compound, the blending ratio of the graphitic material and the silicon-based compound (graphitic material : silicon-based compound) is preferably 10 : 90 to 90 : 10, and more preferably 50 : 50 to 80 : 20.

The positive electrode active material is preferably a positive electrode active material of $LiFePO_4$ type or $LiMe_xO_y$ type (Me means a transition metal containing at least one of Ni, Co and Mn, and x and y each mean an arbitrary number) is preferable.

The content of the electrode active material in the electrode layer is typically 90 to 99 mass%, preferably 91 to 99 mass%, more preferably 92 to 99 mass%, still more preferably 95 to 99 mass%, particularly preferably 96 to 99 mass%, and most preferably 98 to 99 mass%.

The electrode composition may contain a conductive auxiliary agent as necessary. Examples of the conductive auxiliary agent include conductive carbon such as carbon black, acetylene black and Ketjen black. In this case, the content of the conductive auxiliary agent in the electrode composition is typically 0.01 to 20 mass%, and preferably 0.1 to 10 mass%.

The solvent that is used for the electrode composition is preferably an aqueous solvent. The type of the aqueous solvent is not limited, but is preferably water, a water-soluble organic solvent, or a mixed solvent thereof, and more preferably water.

The water-soluble organic solvent is an organic solvent that dissolves in water. Examples thereof include methanol, ethanol, 2-propanol, butanol, glycerin, acetone, methyl ethyl ketone, 1,4-dioxane, N-methyl-2-pyrrolidone, tetrahydrofuran (THF), N,N-dimethylformamide (DMF), N,N-dimethylacetamide, dimethyl sulfoxide (DMSO), acetonitrile, methyl triglycol succinate diester, acetic acid, and combinations thereof.

When the above-described mixed solvent is used as an aqueous solvent, the amount of the water-soluble organic solvent in the mixed solvent is preferably 10 mass% or more, more preferably 50 mass% or more, and still more preferably 70 mass% or more. The upper limit of the amount is not limited, but is preferably 95 mass% or less, and more preferably 90 mass% or less. The aqueous solvent may contain a water-insoluble organic solvent as long as the effect of the invention is not impaired.

The conditions for production of the electrode composition are not limited. For example, to the aqueous solution of carboxymethyl cellulose and/or a salt thereof, other components for constituting the electrode composition are added, and the mixture is mixed while being stirred as necessary.

The form of the electrode composition is not limited. Examples thereof include a liquid form, a paste form, and a slurry form, any of which may be used.

<Electrode for nonaqueous electrolyte secondary batteries>

By applying the above-described electrode composition onto a current collector, an electrode layer can be formed on the current collector. Examples of the application method include blade coating, bar coating, and die coating, with blade coating being preferable. For example, in the case of blade coating, a method is exemplified in which an electrode composition is cast on a current collector using a coating device such as a doctor blade. In addition, the method of lamination is not limited to the above-described specific examples, and a method is also exemplified in which the electrode composition is discharged from an extrusion-type liquid injector having a slot nozzle and applied onto a current collector running while winding around a backup roll. In blade coating, after casting, drying by heating (the temperature is, for example, 80 to 120°C, and the heating time is, for example, 4 to 12 hours) or the like and pressurization by roll pressing or the like is further performed as necessary to obtain an electrode layer.

The shape of the electrode for nonaqueous electrolyte secondary batteries according to the present invention is not limited, but is typically a sheet shape. The thickness of a sheet-shaped electrode plate (thickness of an electrode layer formed of an electrode composition, except the current collector portion) is difficult to define because it depends on the formulation of the composition, production conditions and the like. The thickness is typically 30 to 150 $\mu$m.

(Current collector)

As the current collector, any electrical conductor can be use as long as it does not cause a fatal chemical change in the configured electrode or battery. A negative electrode current collector can be used when the electrode is a negative electrode, and a positive electrode current collector can be used when the electrode is a positive electrode.

As the material for the negative electrode current collector, stainless steel, nickel, copper, titanium, carbon, copper, and a material obtained by attaching carbon, nickel, titanium, or silver on the surface of copper or stainless steel is exemplified. Among them, copper or a copper alloy is preferable, and copper is more preferable.

As the material for the positive electrode current collector, metals such as aluminum and stainless steel are exemplified, with aluminum being preferable.

As the shape of the current collector, a net, a punched metal, a foam metal, a foil processed in a plate shape and the like are exemplified. A foil processed in a plate shape is preferable.

<Nonaqueous electrolyte secondary battery>

An electrode for nonaqueous electrolyte secondary batteries according to the present invention is used as an electrode of a nonaqueous electrolyte secondary battery.

That is, the present invention also provides a nonaqueous electrolyte secondary battery. The nonaqueous electrolyte secondary battery can have a structure in which positive electrodes and negative electrodes are alternately laminated with separators interposed therebetween, and are wound multiple times. The laminate of positive electrodes, separators and negative electrodes which is wound multiple times is placed in a battery case, and a nonaqueous electrolyte is injected, and the battery case is closed to obtain a nonaqueous electrolyte secondary battery.

The shape of the nonaqueous electrolyte secondary battery is not limited. A cylindrical shape, a rectangular shape, a flat shape, a coin shape, a button shape, a sheet shape, or the like can be adopted. The material for the battery case is not particularly limited as long as the purpose of preventing entry of moisture into the battery can be achieved, and examples thereof include a metal, and a laminate of aluminum or the like.

The separator is typically impregnated with a nonaqueous electrolyte. As the separator, for example, a microporous membrane or a nonwoven fabric made of polyolefin such as polyethylene or polypropylene can be used.

The nonaqueous electrolyte typically contains a lithium salt and a nonaqueous solvent. Examples of the lithium salt include $LiPF_6$, $LiAsF_6$, $LiBF_4$, and $LiClO_4$. Examples of the nonaqueous solvent include ethylene carbonate, diethyl carbonate, dimethyl carbonate, propylene carbonate, butylene carbonate, and methylethyl carbonate. The nonaqueous solvents may be used alone, or in combination of two or more thereof. The concentration of the lithium salt in the nonaqueous electrolyte can be typically set to 0.5 to 2.5 mol/L.

An electrode for nonaqueous electrolyte secondary batteries and a nonaqueous electrolyte secondary battery produced from an electrode composition in which the carboxymethyl cellulose and/or a salt thereof according to the present invention are used as a binder for nonaqueous electrolyte secondary battery electrodes have little undissolved gel, thus has a small resistance value, and is excellent in battery characteristics.

Examples

The embodiments of the present invention will be described below by way of examples, but the present invention is not limited by these examples.

<Measurement method and evaluation method>

In examples and comparative examples, measurement and evaluation were performed as follows.

(Measurement of degree of carboxymethyl substitution (DS value))

A sample was precisely weighed to about 2.0 g, and put into a 300 mL conical flask with a stopper. To this, 100 mL of a liquid obtained by adding 100 mL of special grade concentrated nitric acid to 1,000 mL of methanol was added, and the mixture was shaken for 3 hours to convert a salt of carboxymethyl cellulose (CMC) into H-CMC (hydrogen-type carboxymethyl cellulose). The absolute-dry H-CMC is precisely weighed to 1.5 to 2.0 g, and put into a 300 mL conical flask with a stopper. H-CMC was wetted with 15 mL of 80% methanol, 100 mL of 0.1 N-NaOH was added, and the mixture was shaken at room temperature for 3 hours. Using phenolphthalein as an indicator, excess NaOH was back-titrated with 0.1 N-$H_2SO_4$, and the degree of carboxymethyl substitution (DS value) was calculated from the following equations.

A = [(100 × F'-0.1 N-$H_2SO_4$ (mL) × F) × 0.1]/(absolute-dry mass (g) of H-CMC] Degree of carboxymethyl substitution = 0.162 × A/(1 - 0.058 × A)

F': factor of 0.1 N-$H_2SO_4$
F: factor of 0.1 N-NaOH

(Measurement of viscosity of CMC at 1 mass%)

Carboxymethyl cellulose or a salt thereof was weighed and taken in a glass beaker with a volume of 1,000 mL, and dispersed in 900 mL of distilled water to prepare an aqueous dispersion with a solid content of 1% (w/v). The aqueous dispersion is stirred at 600 rpm at 25°C for 3 hours using a stirrer. Thereafter, the viscosity 3 minutes after stirring at a rotation speed of 30 rpm was measured by the method of JIS-Z-8803 using a B type viscometer (manufactured by Toki Sangyo **Co.,** Ltd.).

(Particle size)

The particle sizes D10, D50 and D90 of the carboxymethyl cellulose or a salt thereof used in each of examples and comparative examples were determined from a particle size distribution based on a volume average particle size.
The particle size distribution was measured using a laser diffraction/scattering particle size distribution meter (Mastersizer 2000E, manufactured by Spectris). In the measurement, a sample was dispersed in methanol, and then subjected to ultrasonication for at least 1 minute, followed by measurement.
The following equation was used to calculate the particle size distribution sharpness from the values obtained by the methods described above.

Particle size distribution sharpness = [(D50/D10) + (D90/D50)]/2

In addition, (particle size D90 - particle size D50)/(particle size D50- particle size D10) and particle size D90/particle size D10 were also calculated from the determined particle sizes D10, D50 and D90.

(Dispersibility)

The dispersibility of the carboxymethyl cellulose or a salt thereof used in each of examples and comparative examples was measured using a powder tester (Powder Tester PT-X, manufactured by Hosokawa Micron Corporation). Specifically, a dispersion unit of PT-X was charged with 10 g of a sample, and allowed to fall, and the following equation was used to calculate the dispersibility from the amount of powder falling down onto watch glass.

Dispersibility (%) = (10 (g)- amount of powder falling down onto watch glass (g))/10 (g)

(Dispersibility (BS) in methanol)

For the dispersibility (BS) in methanol of the carboxymethyl cellulose or a salt thereof used in each of examples and comparative examples, the backscattered light intensity (%) was measured by turbinscan (TURBISCAN Lab, manufactured by EKO Instruments Co., Ltd.). Specifically, a measurement vessel is charged with 0.075 g of carboxymethyl cellulose and 15 ml of methanol. Subsequently, the mixture is stirred with a vortex mixer for 10 seconds, and quickly set in the apparatus to start measurement. The backscattered light intensity after 30 minutes at a height of 20 mm is calculated as a dispersibility (BS) in methanol.

(Angle of repose)

The angle of repose of the carboxymethyl cellulose or a salt thereof used in each of examples and comparative examples was measured using a powder tester (Powder Tester PT-X, manufactured by Hosokawa Micron Corporation). Specifically, using a powder property testing apparatus (Powder Tester PT-X (manufactured by Hosokawa Micron Corporation)) in which the angle measurement system is set to "peak operation", the measurement was performed with a sieve having a mesh size of 710 $\mu$m and a line shape of 450 $\mu$m. The moisture content of carboxymethyl cellulose used in the measurement was adjusted to 6.0 to 9.0%.

(Angle of fall)

The angle of fall of the carboxymethyl cellulose or a salt thereof used in each of examples and comparative examples was measured under the same conditions as in the above-mentioned angle of repose measurement using a powder tester (Powder Tester PT-X, manufactured by Hosokawa Micron Corporation).

(Angle of difference)

Using the angle of repose and angle of fall measured as described above, the angle of difference was determined from:

```
Angle of difference = angle of repose - angle of fall.
```

(L/D)

The length L and the width D of carboxymethyl cellulose or a salt thereof used in each of examples and comparative examples were measured to determine L/D. Here, for L and D, averages of the lengths and widths of 50 carboxymethyl celluloses and/or salts thereof observed with, for example, a scanning electron microscope were a length L and a width D, respectively. L/D was an average value of L/D of 50 carboxymethyl celluloses and/or salts thereof.

(BET specific surface area)

Powdered CMC was weighed to 0.1 g, taken in a test tube, and dried at 105°C for 1 hour with nitrogen gas fed using FlowPrep060 manufactured by Micromeritics Instruments Corporation, and the BET specific surface area was measured using GEMINI VII2390 manufactured by Shimadzu Corporation.

(Impedance)

The electrode composition obtained in each of examples and comparative examples was applied onto a current collector (copper foil of 320 mm in length $\times$ 170 mm in width $\times$ 17 $\mu$m in thickness (NC-WS manufactured by Furukawa Electric Co., Ltd.)), and dried at room temperature for 30 minutes, and then at 60°C for 30 minutes. After the drying, pressing was performed at 5.0 kN with a small tabletop roll press (SA-602 manufactured by Tester Sangyo Co., Ltd.) to obtain a negative electrode plate including a negative electrode active material layer on a current collector. The obtained negative electrode plate and a LiCoO$_2$ positive electrode plate (manufactured by Hohsen Corporation, weight per unit area: 227.1 g/m2, effective discharged capacity: 145 mAh/g) were each cut into circular shape with a diameter of 16 mm by punching, and the negative electrode plate 1 and positive electrode plate cut out by punching were dried under vacuum at 120°C for 12 hours. Similarly, a separator (a 20 $\mu$m-thick polypropylene separator manufactured by CS Tech Co., LTD.) was cut into a circular shape with a diameter of 17 mm by punching, and dried under vacuum at 60°C for 12 hours. Thereafter, a negative electrode plate was placed in a stainless steel circular dish-type vessel having a diameter of 20.0 mm, a separator, a positive electrode plate, a spacer (having a diameter of 15.5 mm and a thickness 1 mm), and a stainless steel washer (manufactured by Hohsen Corporation) were then laminated in the stated order, and 300 μL of an electrolytic solution (1 mol/L of $LiPF_6$, volume ratio between ethylene carbonate and diethyl carbonate is 1 : 1) was added to the circular dish-type vessel. This was covered with a stainless steel cap with a polypropylene packing interposed therebetween, and sealed with a coin battery crimping machine (Hohsen Corporation) to obtain a coin-type nonaqueous electrolyte secondary battery. Using a secondary battery charge-discharge tester (BTS2004 manufactured by NAGANO Co., Ltd), the obtained coin-type battery was charged and discharged one cycle, where charge treatment and discharge treatment were performed in the stated order in a thermostatic bath at 25°C. Subsequently, impedance measurement was performed using an impedance tester (VPS manufactured by TOYO Corporation), and a resistance value was calculated using ZView (manufactured by Scribner Associates, Inc.). A smaller resistance value leads to the obtainment of a nonaqueous electrolyte battery having better performance as a battery.

(Measurement of filtration residue amount in carboxymethyl cellulose or salt thereof)

Two liters of an aqueous solution of carboxymethyl cellulose or a salt thereof at 0.3 mass% (mass% of carboxymethyl cellulose or a salt thereof on a dry mass basis) was prepared. Two liters of the aqueous solution was filtered through a 250 mesh filter (stainless steel, mesh size: 63 μm) under a pressure-reduced condition of -200 mmHg using a filter ("Sepa-Rohto" manufactured by Kiriyama glass. CO.). The residue remaining on the 250 mesh filter was dried by air blow at a temperature of 105°C for 16 hours, and the mass of the dried residue was then measured, and given as a mass percent (ppm) with respect to the mass of carboxymethyl cellulose in the carboxymethyl cellulose aqueous solution.

Table 1 shows the results of the measurement and evaluation described above.

<Preparation of electrode composition>

(Example 1)

<Production of CMC>

A solution of 550 parts of isopropanol and 40 parts of sodium hydroxide in 80 parts of water was added to a twinscrew kneader adjusted to a rotation speed of 100 rpm, which was charged with 100 parts on a dry weight basis of linter pulp dried at 100°C for 60 minutes. The mixture was stirred and mixed at 30°C for 90 minutes to prepare mercerized cellulose. Further, 50 parts of monochloroacetic acid was added with stirring, and the mixture was stirred for 30 minutes, then heated to 70°C, and subjected to a carboxymethylation reaction for 90 minutes. After completion of the reaction, the reaction product was neutralized with acetic acid so as to have a pH of about 7, subjected to liquid removal, dried, and ground to obtain CMC1. CMC1 had a DS value of 0.92, and a viscosity at 1% of 1,650 mPa·s.

<Production of electrode composition>

Using MAZERUSTAR (MAZERUSTAR KK-250S manufactured by KURABO INDUSTRIES LTD.), 1.4 g of 98 mass% graphite powder and 0.6 g of 98 mass% $SiO_x$ powder as negative electrode active materials, 0.01 g of 98 mass% acetylene black as a conductive auxiliary agent, 1.0 g of an aqueous dispersion of CMC1 (2 mass%) as a binder, 63 mg of 48 mass% styrene-butadiene rubber (SBR), and 1.5 g of water were mixed to prepare an electrode composition. SBR had a Tg of 7°C, and a average particle size of 165nm.

(Example 2)

<Production of CMC>

A solution of 650 parts of isopropanol and 60 parts of sodium hydroxide in 100 parts of water was added to a twinscrew kneader adjusted to a rotation speed of 100 rpm, which was charged with 100 parts on a dry weight basis of linter pulp dried at 100°C for 60 minutes. The mixture was stirred and mixed at 30°C for 90 minutes to prepare mercerized cellulose. Further, 70 parts of monochloroacetic acid was added with stirring, and the mixture was stirred for 30 minutes, then heated to 70°C, and subjected to a carboxymethylation reaction for 90 minutes. After completion of the reaction, the reaction product was neutralized with acetic acid so as to have a pH of about 7, subjected to liquid removal, dried, and ground to obtain CMC2. CMC2 had a DS value of 0.84, and a viscosity at 1% of 4,580 mPa·s.

<Production of electrode composition>

An electrode composition was prepared in the same manner as in Example 1 except that the type of CMC was changed to CMC2 obtained as described above.

(Example 3)

<Production of CMC>

A solution of 600 parts of isopropanol and 55 parts of sodium hydroxide in 100 parts of water was added to a twinscrew kneader adjusted to a rotation speed of 100 rpm, which was charged with 100 parts on a dry weight basis of linter pulp dried at 100°C for 60 minutes. The mixture was stirred and mixed at 30°C for 90 minutes to prepare mercerized cellulose. Further, 65 parts of monochloroacetic acid was added with stirring, and the mixture was stirred for 30 minutes, then heated to 70°C, and subjected to a carboxymethylation reaction for 90 minutes. After completion of the reaction, the reaction product was neutralized with acetic acid so as to have a pH of about 7, subjected to liquid removal, dried, and ground to obtain CMC3. CMC3 had a DS value of 0.70, and a viscosity at 1% of 4,900 mPa·s.

<Production of electrode composition>

An electrode composition was prepared in the same manner as in Example 1 except that the type of CMC was changed to CMC3 obtained as described above.

(Example 4)

<Production of CMC>

A solution of 600 parts of isopropanol and 38 parts of sodium hydroxide in 80 parts of water was added to a twinscrew kneader adjusted to a rotation speed of 100 rpm, which was charged with 100 parts on a dry weight basis of linter pulp dried at 100°C for 60 minutes. The mixture was stirred and mixed at 30°C for 90 minutes to prepare mercerized cellulose. Further, 46 parts of monochloroacetic acid was added with stirring, and the mixture was stirred for 30 minutes, then heated to 70°C, and subjected to a carboxymethylation reaction for 90 minutes. After completion of the reaction, the reaction product was neutralized with acetic acid so as to have a pH of about 7, subjected to liquid removal, dried, and ground to obtain CMC4. CMC4 had a DS value of 0.70, and a viscosity at 1% of 8,980 mPa·s.

<Production of electrode composition>

An electrode composition was prepared in the same manner as in Example 1 except that the type of CMC was changed to CMC4 obtained as described above.

(Comparative Example 1)

<Production of electrode composition>

An electrode composition was prepared in the same manner as in Example 1 except that the type of CMC was changed to CMC5 having a DS value of 0.93 and a viscosity at 1% of 3,460 mPa·s.

(Comparative Example 2)

<Production of electrode composition>

An electrode composition was prepared in the same manner as in Example 1 except that the type of CMC was changed to CMC6 having a DS value of 0.69 and a viscosity at 1% of 6,340 mPa·S.

(Comparative Example 3)

<Treatment of CMC>

CMC7 (having a DS value of 0.68 and a viscosity 1650 mPa·s) was ground with a ball mill, and classified through a 400 mesh sieve. The dispersibility and L/D of CMC7 were measured. An electrode composition was not prepared.

[Table 1]

| | | Example | | | | Comparative Example | | |
|---|---|---|---|---|---|---|---|---|
| | | 1 | 2 | 3 | 4 | 1 | 2 | 3 |
| DS value | | 0.92 | 0.84 | 0.70 | 0.70 | 0.93 | 0.69 | 0.68 |
| Viscosity (mPa. s) | | 1650 | 4580 | 4900 | 8980 | 3460 | 6340 | 1650 |
| Particle size | D10 ($\mu$m) | 3.2 | 3.6 | 3.3 | 3.5 | 18.3 | 19.9 | - |
| | D50 ($\mu$m) | 12.9 | 14.7 | 14.5 | 14.1 | 44.1 | 49.5 | - |
| | D90 ($\mu$m) | 27.4 | 32.1 | 31.6 | 31.9 | 112.8 | 139.4 | - |
| D90 - D10 ($\mu$m) | | 24.2 | 28.5 | 28.3 | 28.4 | 94.5 | 119.5 | - |
| D90 - D50 ($\mu$m) | | 14.5 | 17.4 | 17.1 | 17.8 | 68.7 | 89.9 | - |
| D50 - D10 ($\mu$m) | | 9.7 | 11.1 | 11.2 | 10.6 | 25.8 | 29.6 | - |
| (D90 - D50) / (D50 - D10) | | 1.49 | 1.57 | 1.53 | 1.68 | 2.66 | 3.04 | - |
| D90 / D10 | | 8.56 | 8.92 | 9.58 | 9.11 | 6.16 | 7.01 | - |
| Particle size distribution sharpness | | 3.1 | 3.1 | 3.3 | 3.1 | 2.5 | 2.7 | - |
| Dispersibility (%) | | 30.2 | 49.7 | 46.9 | 36.1 | 14.4 | 12.2 | 17.8 |
| Dispersibility (BS) in methanol (%) | | 6.0 | 6.3 | 7.2 | 8.8 | 20.2 | 11.2 | 12.8 |
| Angle of repose (°) | | 47.6 | 48.6 | 47.4 | 50.5 | 41.9 | 46.8 | - |
| Angle of fall (°) | | 27.3 | 25.6 | 25.5 | 21.0 | 17.7 | 22.9 | - |
| Angle of difference (°) | | 20.3 | 23.0 | 21.9 | 29.5 | 24.2 | 23.9 | - |
| Length L ($\mu$m) Average for 50 particles | | 20.7 | 23.9 | 19.8 | 20.1 | 118.1 | 109.9 | 35.0 |
| Width D ($\mu$m) Average for 50 particles | | 11.2 | 11.4 | 8.8 | 7.9 | 25.0 | 24.1 | 24.8 |
| L/D Average for 50 particles | | 2.04 | 2.37 | 2.56 | 2.77 | 5.08 | 5.28 | 1.43 |
| BET specific surface area (m$^2$/g) | | 2.16 | 2.54 | 2.01 | 2.16 | 0.38 | 0.44 | - |
| Impedance ($\Omega$) | | 4.3 | 4.5 | 4.5 | 4.9 | 6.1 | 6.5 | - |
| Filtration residue amount (ppm) | | 40 | 48 | 156 | 180 | 230 | 280 | - |

As shown in Table 1, it was demonstrated that an electrode layer obtained from an electrode composition with carboxymethyl cellulose and/or a salt thereof which are used for a binder for nonaqueous electrolyte secondary battery electrodes and in which the degree of carboxymethyl substitution per anhydroglucose unit is 0.5 to 1.2, the dispersibility as determined using a powder tester is 20 to 60%, or the dispersibility (BS) in methanol as determined by turbinscan is 3 to 10% had a small resistance value, and gave a nonaqueous electrolyte secondary battery having good battery performance.

**Claims**

1. A carboxymethyl cellulose and/or a salt thereof which are used for a binder for nonaqueous electrolyte secondary battery electrodes, wherein a degree of carboxymethyl substitution per anhydroglucose unit is 0.5 to 1.2, a dispersibility as determined using a powder tester is 20 to 60%, or a dispersibility (BS) in methanol as determined by turbinscan is 3 to 10%.

2. The carboxymethyl cellulose and/or a salt thereof according to claim 1, wherein a ratio of a length L to a width D (L/D) is 1.5 to 5.0.

3. The carboxymethyl cellulose and/or a salt thereof according to claim 1, wherein a value obtained by subtracting a particle size D50 from a particle size D90 (particle size D90 - particle size D50) is 5 to 30 $\mu$m, and a value obtained by subtracting a particle size D10 from the particle size D50 (particle size D50 - particle size D10) is 5 to 20 $\mu$m.

4. The carboxymethyl cellulose and/or a salt thereof according to claim 1, wherein a ratio between a value obtained by subtracting a particle size D50 from a particle size D90 (particle size D90 - particle size D50) and a value obtained by subtracting a particle size D10 from the particle size D50 (particle size D50 - particle size D10) ((particle size D90 - particle size D50)/(particle size D50 - particle size D10)) is 1.0 to 2.5.

5. The carboxymethyl cellulose and/or a salt thereof according to claim 1, wherein a ratio between a particle size D90 and a particle size D10 (particle size D90/particle size D10) is 7.5 to 11.

6. The carboxymethyl cellulose and/or a salt thereof according to any one of claims 1 to 5, wherein a particle size D50 is 10 to 20 $\mu$m.

7. The carboxymethyl cellulose and/or a salt thereof according to any one of claims 1 to 5, wherein a difference between a particle size D90 and a particle size D10 (particle size D90 - particle size D10) is 10 to 50 $\mu$m.

8. The carboxymethyl cellulose and/or a salt thereof according to any one of claims 1, 2, 4 and 5, wherein a difference between a particle size D90 and a particle size D50 (particle size D90 - particle size D50) is 5 to 30 $\mu$m.

9. The carboxymethyl cellulose and/or a salt thereof according to any one of claims 1, 2, 4 and 5, wherein a difference between a particle size D50 and a particle size D10 (particle size D50 - particle size D10) is 5 to 20 $\mu$m.

10. The carboxymethyl cellulose and/or a salt thereof according to any one of claims 1 to 5, wherein an angle of repose is 42° or more.

11. The carboxymethyl cellulose and/or a salt thereof according to any one of claims 1 to 5, wherein an angle of fall is 19° or more.

12. The carboxymethyl cellulose and/or a salt thereof according to any one of claims 1 to 5, wherein a viscosity in a 1 mass% aqueous solution which is measured at 25°C with a B type viscometer (30 rpm) is 1,000 to 20,000 mPa·s.

13. The carboxymethyl cellulose and/or a salt thereof according to any one of claims 1 to 5, wherein when 2 liters of a 0.3 mass% aqueous solution of the carboxymethyl cellulose or a salt thereof with a dry mass m is prepared, and all filtered through a 250 mesh filter under a pressure-reduced condition of -200mmHg, and a dry mass M of a residue on the filter after filtration is measured, a ratio of the dry mass M to the dry mass m is less than 200 ppm.

14. An electrode composition for nonaqueous electrolyte secondary batteries, including the carboxymethyl cellulose and/or a salt thereof according to any one of claims 1 to 5, and styrene-butadiene rubber having a average particle size of 50 nm to 300 nm.

15. The electrode composition for nonaqueous electrolyte secondary batteries according to claim 14, wherein a glass transition temperature of the styrene-butadiene rubber is -50°C to 50°C.

16. An electrode for nonaqueous electrolyte secondary battery in which the electrode composition for nonaqueous electrolyte secondary batteries according to claim 14 is used.

17. A nonaqueous electrolyte secondary battery in which the electrode composition for nonaqueous electrolyte secondary batteries according to claim 14 is used.

## INTERNATIONAL SEARCH REPORT

| International application No. |
| --- |
| **PCT/JP2023/021648** |

**A.     CLASSIFICATION OF SUBJECT MATTER**

**H01M 4/62**(2006.01)i; **C08L 1/26**(2006.01)i; **C08L 9/06**(2006.01)i; **H01M 4/13**(2010.01)i; **H01M 4/139**(2010.01)i
FI:     H01M4/62 Z; C08L1/26; C08L9/06; H01M4/13; H01M4/139

According to International Patent Classification (IPC) or to both national classification and IPC

**B.     FIELDS SEARCHED**

Minimum documentation searched (classification system followed by classification symbols)

H01M4/62; C08L1/26; C08L9/06; H01M4/13; H01M4/139

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2011-063673 A (DAICEL CHEMICAL INDUSTRIES LTD.) 31 March 2011 (2011-03-31) | 1-17 |
| A | JP 2017-149901 A (DKS CO. LTD.) 31 August 2017 (2017-08-31) | 1-17 |
| A | JP 2020-161281 A (NIPPON PAPER INDUSTRIES CO., LTD.) 01 October 2020 (2020-10-01) | 1-17 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 July 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT

Information on patent family members

International application No.

**PCT/JP2023/021648**

| Patent document cited in search report | | | Publication date (day/month/year) | Patent family member(s) | | | Publication date (day/month/year) |
|---|---|---|---|---|---|---|---|
| JP | 2011-063673 | A | 31 March 2011 | (Family: none) | | | |
| JP | 2017-149901 | A | 31 August 2017 | US | 2019/0055323 | A1 | |
| | | | | EP | 3421501 | A1 | |
| | | | | TW | 201800422 | A | |
| | | | | CN | 108473594 | A | |
| | | | | KR | 10-2018-0117611 | A | |
| JP | 2020-161281 | A | 01 October 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015198038 A